# EUROPEAN PATENT SPECIFICATION

(11) **EP 1 646 039 B1**
(45) Date of publication and mention of the grant of the patent: **03.12.2008**
(21) Application number: 05256265.9
(22) Date of filing: 06.10.2005
(51) Int. Cl.: G11B 7/00, G11B 7/006, G11B 7/0045, G11B 7/125

(54) **Optical disk recording device for optimizing write pulse string in use of energy level of write pulse string and method thereof**
Aufzeichnungsvorrichtung für eine optische Platte zur Optimierung der Schreibimpulsfolge in Verwendung des Energieniveaus der Schreibimpulsfolge und entsprechendes Verfahren
Dispositif d'enregistrement sur disque optique pour optimiser le train d'impulsions d'écriture utilisé du niveau d'énergie du train d'impulsion d'écriture, et procédé correspondant

(30) Priority: 08.10.2004 KR 2004080217
(43) Date of publication of application: 12.04.2006
(73) Proprietor: Samsung Electronics Co., Ltd., Suwon-si, Gyeonggi-Do (KR)
(72) Inventor: Kim, Min-seok, c/o Samsung Electronics Co. Ltd., Yeongtong-gu Suwon-si Gyeonggi-do (KR); Ahn, Yong-jin, Yangjac-dong Seocho-gu Seoul (KR)
(74) Representative: Brandon, Paul Laurence

(56) References cited:
- US-A- 5 367 514
- US-A1- 2004 145 993
- US-B1- 6 611 481
- US-B1- 6 628 594

## Description

The present invention relates to optical disk devices and methods of optimizing a write pulse string.

An optical disk recording device generates a write pulse string based on a given write pattern, and records data on an optical disk utilizing the generated write pulse string. If the write pulse string being utilized is not appropriate, the data recording operation on the optical disk is not normally performed. Therefore, it is very important that the optical disk recording device generates an optimum write pulse string.

Traditional optical disk recording devices optimized write pulse strings through test writing and error rate measurement. In detail, data was first written as test writing in a test zone of an optical disk, and this test write data was read for error rate measurement. Based on a result of the error rate measurement, the write pulse string was adjusted to reduce the error rate.

In effect, generating an optimum write pulse string is one of the most important tasks of data recording on an optical disk. Therefore, a number of suggestions and schemes have been developed to optimize a write pulse string, and studies show that other attempts besides the related art techniques are already being made to find a more effective method of optimizing a write pulse string.

One of the problems of the related art method of optimizing a write pulse string is that it can only be used to generate and adjust a write pulse string according to a predetermined or pre-stored write pattern, and is useless in the case of generating and adjusting a write pulse string according to a new write pattern. Accordingly, there exists a need for developing a method to optimize a write pulse string by generating and adjusting the write pulse string according to a new write pattern.

Disclosed in US 2004/0145993 A1 (cf. the preamble of claims 1 and 6) is a writing system in which an optimum write condition for a high speed, and an optimum write condition for a low speed, write operation is determined to obtain a condition for a middle speed write operation based on a recommended value written on the disk.

It is, therefore, an -aim of preferred embodiments of the present invention to provide an optical disk recording device to optimize a write pulse string by using an energy level of the write pulse string, and a method to optimize the write pulse string by using the energy level, wherein the write pulse string is used in a data recording operation on an optical disk.

According to the present invention there is provided an optical disk device, including an optical pickup unit to be driven by a supplied write pulse string to record data on an optical disk; an optical pickup driving unit to generate and supply the write pulse string to the optical pickup unit; an energy level calculator to calculate an energy level of the write pulse string generated by the optical pickup driving unit; and a controller to control the generation of the write pulse string of the optical pickup driving unit, so that the calculated energy level is proximate to a predetermined reference energy level; the device characterized in that:
the controller controls the optical pickup driving unit to adjust the write pulse string in response to an absolute value of a difference between the calculated energy level and the reference energy level exceeding a predetermined threshold level.
Another aspect of the present invention provides a method of optimizing a write pulse string, the method including: generating a write pulse string to use in recording data on an optical disk; calculating an energy level of the generated write pulse string; and controlling the generation of the write pulse string to approximate the calculated energy level to a predetermined reference energy level; the method characterized in that:
the write pulse string is adjusted in response to an absolute value of a difference between the calculated energy level and the reference energy level exceeding a predetermined threshold level.

The write pulse string may be adjusted in response to an absolute value of difference between the calculated energy level and the reference energy level exceeding a predetermined threshold level.

The calculation of the energy level of the generated write pulse string may include: measuring power levels of write pulses of the write pulse string; measuring write pulse widths of write pulses of the write pulse string; multiplying the measured power levels by the measured write pulse widths, respectively; and adding all of the multiplication results to calculate the energy level.

The energy level may be calculated by integrating the write pulse string, and the integrated value may be outputted as the energy level.

The write pulse string may include at least one of a multi-type write pulse string, a non-multi type write pulse string, a castle-type write pulse string, or a combination thereof.

Another aspect of the present invention provides an optical disk device including an energy level measuring unit to measure an energy level of a write pulse string used in recording data on an optical disk; and a controller to control a generation of the write pulse string so that the energy level is within a predetermined range above or below a reference energy level.

The device may further comprise a write pulse string generation unit to generate the write pulse string, wherein the controller controls the write pulse string generation unti to adjust the energy level of the write pulse string to within the predetermined range.

The energy level measuring unit may measure power levels of write pulses of the write pulse string, measures pulse widths of the write pulses, multiplies the power levels by the respective pulse widths, and sums the multiplication results to measure the energy level.

The write pulse string may be adjusted in response to an absolute value of a difference between the measured energy level and the reference energy level being larger than a predetermined value.

The energy level may be adjusted by changing a timing of write pulses of the write pulse string, a width of the write pulses, intervals between the write pulses, or a combination thereof.

Another aspect of the present invention provides a method of generating a write pulse string, the method including measuring an energy level of the write pulse string used in recording data on an optical disk; and controlling a generation of the write pulse string so that the energy level is within a predetermined range above or below a reference energy level.

The measuring of the energy level may include: measuring power levels of write pulses of the write pulse string; measuring pulse widths of the write pulses; multiplying the power levels by the respective pulse widths; and summing the multiplication results.

The method may further comprise adjusting the write pulse string in response to an absolute value of a difference between the measured energy level and the reference energy level being larger than a predetermined value.

The method may further include finely adjusting the write pulse string through error rate measurement in response to the energy level being within the predetermined range.

The present invention will become apparent and more readily appreciated from the following description of the embodiments, taken in conjunction with the accompanying drawings of which:
FIG. 1 is a schematic block diagram of an optical disk recording device to optimize a write pulse string by using an energy level of the write pulse string, in accordance with an embodiment of the present invention;
FIG. 2A illustrates one example of a three level write pulse string;
FIG. 2B illustrates one example of a two level write pulse string;
FIG. 3 is a detailed block diagram illustrating one embodiment of an energy level calculator illustrated in FIG. 1; and
FIG. 4 is a flow chart illustrating how the optical disk recording device in FIG. 1 optimizes a write pulse string by using an energy level of the write pulse string.

Reference will now be made in detail to the embodiments of the present invention, examples of which are illustrated in the accompanying drawings, wherein like reference numerals refer to the like elements throughout. The embodiments are described below to explain the present invention by referring to the figures.

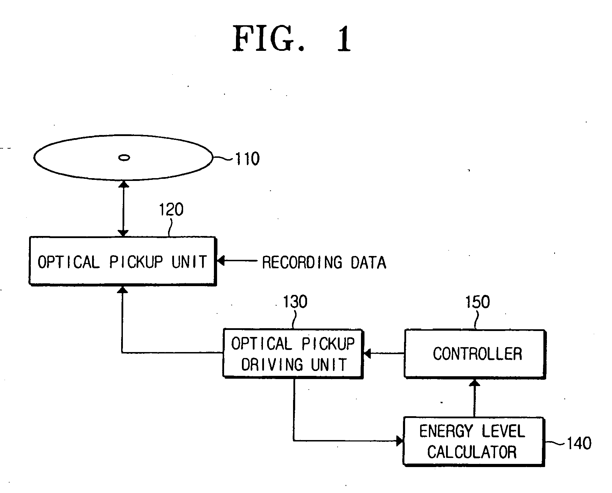

FIG. 1 is a schematic block diagram of an optical disk recording device to optimize a write pulse string by using an energy level of the write pulse string, in accordance with an embodiment of the present invention. Referring to FIG. 1, the optical disk recording device of the present invention includes an optical pickup unit 120, an optical pickup driving unit 130, an energy level calculator 140, and a controller 150.

The optical pickup unit 120 is driven by a supplied write pulse string, and records recording data (that is, data to be recorded) on an optical disk 110 provided in the optical disk recording device.

The optical pickup driving unit 130 generates a write pulse string to be used in driving the optical pickup unit 120, and supplies the write pulse string to the optical pickup unit 120. The optical pickup driving unit 130 is capable of generating a write pulse string not only according to a pre-stored write pattern in a memory (not shown), but also according to a new write pattern which is not yet stored in the memory. In the latter case, the optical pickup driving unit 130 generates a new write pulse string in reference to the specifications of the optical disk recording device of this embodiment of the present invention and the specifications of the optical disk 110.

In addition, the optical driving unit 130 is capable of adjusting the write pulse string being generated, under the control of the controller 150 (to be described later in this detailed description). More specifically, the optical pickup driving unit 130 adjusts the write pulse string by changing a timing, write pulse width, and/or interval between write pulses forming the write pulse string.

The energy level calculator 140 receives the write pulse string generated by the optical pickup driving unit 130, and calculates an energy level (E) of the write pulse string. Then, the energy level calculator 140 supplies the calculated energy level (E) to the controller 150.

The energy level (E) of the write pulse string refers to the quantity of energy that is transferred from the optical pickup unit 120 to the optical disk 110 when the optical pickup unit 120, which is driven by the write pulse string, records data on the optical disk 110. More explanation regarding the energy level (E) of the write pulse string and the energy level calculator 140 will be provided later in this detailed description.

The controller 150 compares the calculated energy level (E) received from the energy calculator 140 with a pre-stored reference energy level (Er), and, based on a result of the comparison, controls the write pulse string generation of the optical pickup driving unit 130 to adjust the generated write pulse string so that the generated write pulse string has an energy level (E) that more closely approximates the reference energy level (Er).

For instance, if the absolute value of the difference between the calculated energy level (E) and the reference energy level (Er), i.e., (|E - Er|), exceeds a threshold level (Et), the controller 150 controls the optical pickup driving unit 130 to adjust the write pulse string.

The following will now explain in more detail how the energy level (E) of a write pulse string is measured by the energy level calculator 140.

As described above, the energy level (E) of a write pulse string refers to the quantity of energy that is transferred from the optical pickup unit 120 to the optical disk 110 when the optical pickup unit 120, which is driven by the write pulse string, records data on the optical disk 110. The energy level (E) of a write pulse string is an indicator of a normal data recording on the optical disk 110, that is, it indicates whether the optical pickup driving unit 130 is normally generating and applying a write pulse string to drive the optical pickup unit 120.

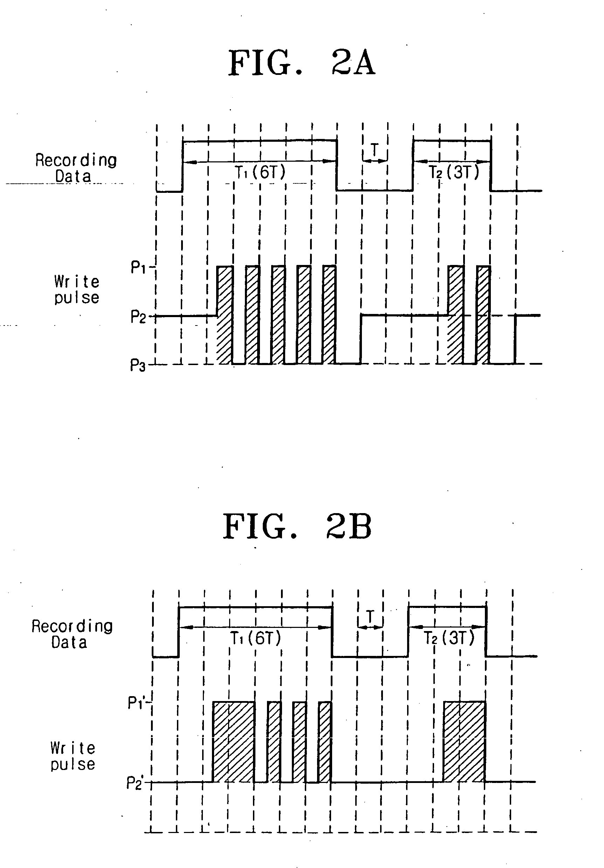

This is because although there are many write pulse strings generated by the optical pickup driving unit 130 and supplied to the optical pickup unit 120 to record data on the optical disk 110, the energy levels of those write pulse strings are normally exactly the same or almost the same. More details on this can be found in the following descriptions associated with FIGS. 2A and 2B.

FIG. 2A illustrates one example of a three level (P₁, P₂, and P₃) write pulse string, and FIG. 2B illustrates one example of a two level (P₁', P₂') write pulse string. The optical pickup driving unit 130 is capable of generating not only the same write pulse strings as those shown in FIG. 2A and FIG. 2B, but also other write pulse strings with different patterns.

Also, the result of data recording based on the write pulse string in FIG. 2A is substantially identical to the result of data recording based on the write pulse string in FIG. 2B. That is to say, although write pulse strings may have different patterns, the results of data recording thereof are normally the same.

Therefore, write pulse strings causing the same result of data recording have exactly the same or almost the same energy levels. In other words, the energy level of the write pulse string in FIG. 2A (the sum of areas marked with slashing lines in FIG. 2A) and the energy level of the write pulse string in FIG. 2B (the sum of areas marked with slashing lines in FIG. 2B) are exactly the same or almost the same.

These observations lead to the conclusion that if the optical pickup driving unit 130 should generate a new write pulse string which yields identical or almost completely identical results as the write pulse strings shown in FIGS. 2A and 2B, the energy level of the new write pulse string should be exactly the same or almost the same as the energy levels of the write pulse strings in FIGS. 2A and 2B.

Namely, when the optical pickup driving unit 130 generates a new write pulse string, it determines whether the energy level of the new write pulse string is exactly the same or almost the same as the predetermined reference energy level. In this manner, one can make a decision regarding whether the new write pulse string is appropriate to use in data recording.

In this light, the energy level of a write pulse string becomes an indicator showing whether or not the optical pickup driving unit 130 generates an appropriate write pulse string to drive the optical pickup unit 120. As such, by using the energy level of a new write pulse string, which has not been introduced to related art technologies, an optimum write pulse string can be generated.

Even though this embodiment of the present invention has been described based on the multi-type write pulse string, this is for illustrative purposes only. The principles of the present teaching can be equally applied to other write pulse strings, such as non-multi type write pulse strings and castle type write pulse strings.

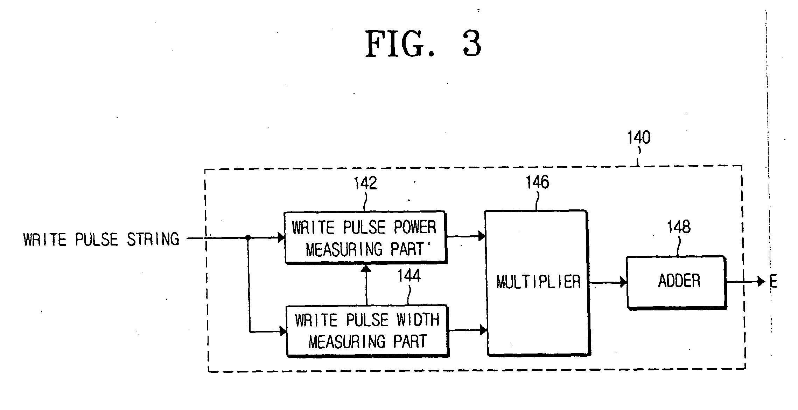

The energy level (E) of the write pulse string is calculated by the energy level calculator 140. FIG. 3 illustrates one embodiment of the energy level calculator 140 with this function. As can be seen in the drawing, the energy level calculator 140 includes a write pulse power measuring part 142, a write pulse width measuring part 144, a multiplier 146, and an adder 148.

The write pulse power measuring part 142 measures power levels of write pulses forming a write pulse string from the optical pickup driving unit 130, and supplies the measured power levels to the multiplier 146.

If the write pulse string supplied from the optical pickup driving unit 130 to the write pulse power measuring part 142 is the one shown in FIG. 2A, power levels of each of the write pulses measured by the write pulse power measuring part 142 would be P₁ - P₃ [W]. Similarly, if the write pulse string supplied from the optical pickup driving unit 130 to the write pulse power measuring part 142 is the one shown in FIG. 2B, power levels of each of the write pulses measured by the write pulse power measuring part 142 would be P₁' - P₂'[W].

The write pulse width measuring part 144 measures pulse widths of the write pulses forming the write pulse string from the optical pickup driving unit 130, and supplies the measured write pulse widths to the multiplier 146.

The multiplier 146 multiplies the power levels supplied from the write pulse power measuring part 142 by the write pulse widths supplied from the write pulse width measuring part 144, respectively, and supplies the multiplication results to the adder 148. During the multiplication operation, the multiplier 146 multiplies power levels by their corresponding write pulse widths, respectively.

Then, the adder 148 adds all of the multiplication results outputted from the multiplier 146 to calculate an energy level, and supplies the calculated energy level to the controller 150.

Meanwhile, the energy level calculator 140 can also be used as an integrator, which integrates a write pulse string from the optical pickup driving unit 130 and outputs the integration result to the controller 150 as an energy level.

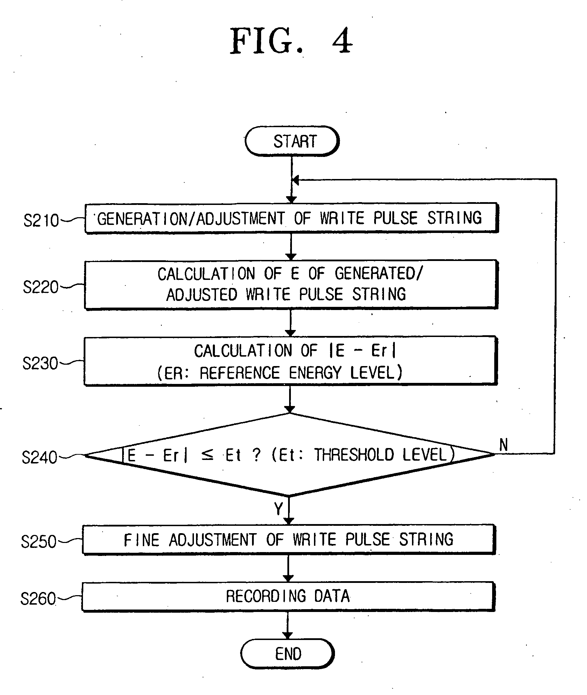

A method of optimizing a write pulse string by using the energy level of the write pulse string will now be described in greater detail below, in reference to FIG. 4.

First of all, the optical pickup driving unit 130 generates a write pulse string (S210). The generated write pulse string is supplied to the energy level calculator 140.

Here, it does not matter whether the write pulse string generated by the optical pickup driving unit 130 is a write pulse string based on the pre-stored write pattern in the memory (not shown), or a different write pulse string based on a new write pattern which is not yet stored in the memory. In the latter case, the optical pickup driving unit 130 can generate the new write pulse string in reference to the specifications of the optical disk recording device of this embodiment of the present invention and the specifications of the optical disk 110.

The energy level calculator 140 calculates an energy level (E) of the write pulse string generated in operation S210 (S220). The calculated energy level (E) is supplied to the controller 150. The energy level (E) is calculated by either (i) multiplying power levels and pulse widths of the write pulses of the write pulse string, respectively, and adding all of the multiplication results, or (ii) integrating the write pulse string.

The controller 150 calculates an absolute value of the difference between the energy level (E) from operation S220 and the predetermined energy level (Er), i.e., |E - Er| (S230).

If the absolute value |E - Er| exceeds the threshold level (Et) (S240), the controller 150 controls the optical pickup driving unit 130 to adjust the write pulse string. Accordingly, the optical pickup driving unit 130 adjusts the generated write pulse string (S210). To this end, the optical pickup driving unit 130 changes timings of the write pulses of the write pulse string, write pulse widths, and/or intervals between the write pulses. This adjustment is necessary because the absolute value |E - Er| greater than the threshold level (Et) implies that the write pulse string generated in S210 is inappropriate to use in recording data on the optical disk 110.

Operations S220 to S240 are repeatedly performed on the adjusted write pulse string of S210 until the absolute value |E - Er| is lower than or equal to the threshold level (Et).

If the absolute value |E - Er| is lower than or equal to the threshold level (Et) (S240), the write pulse string undergoes a fine adjustment (S250), and later the optical pickup unit 120 records data (S260). The absolute value |E - Er| being lower than or equal to the threshold level (Et) implies that the write pulse string generated in S210 is appropriate to use in recording data on the optical disk 110.

The fine adjustment performed in S250 involves reading test record data, and finely adjusting the generated write pulse string through error rate measurement. Therefore, in order to optimize the write pulse string, the write pulse string is adjusted first by using the energy level thereof, and is more finely adjusted later through the test record/error rate measurement.

As set forth above, according to the preferred embodiment of the present invention, the write pulse string to be used in data recording on the optical disk can be optimized utilizing the energy level of the write pulse string (which has not been suggested by any of related arts). Preferred embodiments of the present invention are also applicable to generate a write pulse string based on a new write pattern.

The foregoing embodiments and aspects are merely exemplary, and are not to be construed as limiting the present invention. The present teaching can be readily applied to other types of apparatuses. Although a few embodiments of the present invention have been shown and described, it would be appreciated by those skilled in the art that changes may be made in these embodiments within the scope defined in the claims.

## Claims

1. An optical disk device, comprising:
an optical pickup unit (120) to be driven by a supplied write pulse string to record data on an optical disk (110);
an optical pickup driving unit (130) to generate and supply the write pulse string to the optical pickup unit;
an energy level calculator (140) to calculate an energy level of the write pulse string generated by the optical pickup driving unit; and
a controller (150) to control the generation of the write pulse string of the optical pickup driving unit, so that the calculated energy level is proximate to a predetermined reference energy level; the device **characterized in that**:
the controller (150) controls the optical pickup driving unit (130) to adjust the write pulse string in response to an absolute value of a difference between the calculated energy level and the reference energy level exceeding a predetermined threshold level.

2. The device according to claim 1, wherein the energy level calculator comprises:
a write pulse power measuring part (142) to measure power levels of write pulses forming the write pulse string;
a write pulse width measuring part (144) to measure pulse widths of the write pulses forming the write pulse string;
a multiplier (146) to multiply the power levels provided from the write pulse power measuring part by the write pulse widths provided from the write pulse width measuring part, respectively; and
an adder (148) to add all of the multiplication results to calculate the energy level.

3. The device according to any preceding claim, wherein the energy level calculator (140) integrates the write pulse string, and outputs the integration result as the energy level.

4. The device according to any preceding claim, wherein the write pulse string comprises at least one of a multi-type write pulse string, a non-multi type write pulse string, a castle type write pulse string, or a combination thereof.

5. The device according to any preceding claim, wherein the energy level is adjusted by changing a timing of write pulses of the write pulse string, a width of the write pulses, intervals between the write pulses, or a combination thereof.

6. A method of optimizing a write pulse string, the method comprising:
generating a write pulse string to use in recording data on an optical disk;
calculating an energy level of the generated write pulse string; and
controlling the generation of the write pulse string to approximate the calculated energy level to a predetermined reference energy level; the method **characterized in that**:
the write pulse string is adjusted in response to an absolute value of a difference between the calculated energy level and the reference energy level exceeding a predetermined threshold level.

7. The method according to claim 6, wherein the calculation of the energy level of the generated write pulse string comprises:
measuring power levels of write pulses of the write pulse string;
measuring write pulse widths of write pulses of the write pulse string;
multiplying the measured power levels by the measured write pulse widths, respectively; and
adding all of the multiplication results to calculate the energy level.

8. The method according to any one of claims 6-7, wherein the energy level is calculated by integrating the write pulse string, and the integrated value is outputted as the energy level.

9. The method according to any one of claims 6-8, wherein the write pulse string comprises at least one of a multi-type write pulse string, a non-multi type write pulse string, a castle-type write pulse string, or a combination thereof.

10. The method of any one of claims 6-9, wherein the energy level is adjusted by changing a timing of write pulses of the write pulse string; a width of the write pulses, intervals between the write pulses, or a combination thereof.

11. The method of any one of claim 6-10, further comprising finely adjusting the write pulse string through error rate measurement in response to the energy level being within the predetermined range.

## Patentansprüche

1. Optische Platteneinrichtung, umfassend:
eine optische Abnehmereinheit (120), die durch eine zugeführte Schreibimpulsfolge anzusteuern ist, um Daten auf einer optischen Platte (110) aufzuzeichnen;
eine Ansteuereinheit (130) des optischen Abnehmers zum Erzeugen der Schreibimpulsfolge und Zuführen dieser zu der optischen Abnehmereinheit;
einen Energiewertkalkulator (140) zum Berechnen eines Energiewerts der durch die Ansteuereinheit des optischen Abnehmers erzeugten Schreibimpulsfolge; und
eine Steuerung (150) zum Steuern der Erzeugung der Schreibimpulsfolge der Ansteuereinheit des optischen Abnehmers dergestalt, daß der berechnete Energiewert in der Nähe eines vorbestimmten Referenzenergiewerts liegt; wobei die Einrichtung **dadurch gekennzeichnet ist, daß**
die Steuerung (150) die Ansteuereinheit (130) des optischen Abnehmers steuert, um die Schreibimpulsfolge als Reaktion darauf, daß ein Absolutwert einer Differenz zwischen dem berechneten Energiewert und dem Referenzenergiewert einen vorbestimmten Schwellenwert übersteigt, zu justieren.

2. Einrichtung nach Anspruch 1, wobei der Energiewertkalkulator folgendes umfaßt:
einen Schreibimpuls-Leistungsmeßteil (142) zum Messen von Leistungswerten von die Schreibimpulsfolge bildenden Schreibimpulsen;
einen Schreibimpuls-Breitenmeßteil (144) zum Messen von Impulsbreiten der die Schreibimpulsfolge bildenden Schreibimpulse;
einen Multiplizierer (146) zum respektiven Multiplizieren der aus dem Schreibimpuls-Leistungsmeßteil gelieferten Leistungswerte mit den aus dem Schreibimpuls-Breitenmeßteil gelieferten Schreibimpulsbreiten; und
einen Addierer (148) zum Addieren aller der Multiplikationsergebnisse, um den Energiewert zu berechnen.

3. Einrichtung nach einem der vorhergehenden Ansprüche, wobei der Energiewertkalkulator (140) die Schreibimpulsfolge integriert und das Integrationsergebnis als den Energiewert ausgibt.

4. Einrichtung nach einem der vorhergehenden Ansprüche, wobei die Schreibimpulsfolge mindestens ein Element von folgendem umfaßt: eine Mehrtyp-Schreibimpulsfolge, eine Nicht-Mehrtyp-Schreibimpulsfolge, eine Burgtyp-Schreibimpulsfolge oder eine Kombination davon.

5. Einrichtung nach einem der vorhergehenden Ansprüche, wobei der Energiewert durch Ändern eines Timings von Schreibimpulsen der Schreibimpulsfolge, einer Breite der Schreibimpulse, von Intervallen zwischen den Schreibimpulsen oder einer Kombination davon justiert wird.

6. Verfahren zum Optimieren einer Schreibimpulsfolge, mit den folgenden Schritten:
Erzeugen einer Schreibimpulsfolge zur Verwendung beim Aufzeichnen von Daten auf einer optischen Platte;
Berechnen eines Energiewerts der erzeugten Schreibimpulsfolge; und
Steuern der Erzeugung der Schreibimpulsfolge, um den berechneten Energiewert an einen vorbestimmten Referenzenergiewert anzunähern; wobei das Verfahren **dadurch gekennzeichnet ist, daß**
die Schreibimpulsfolge als Reaktion darauf, daß ein Absolutwert einer Differenz zwischen dem berechneten Energiewert und dem Referenzenergiewert einen vorbestimmten Schwellenwert übersteigt, justiert wird.

7. Verfahren nach Anspruch 6, wobei die Berechnung des Energiewerts der erzeugten Schreibimpulsfolge folgendes umfaßt:
Messen von Leistungswerten von Schreibimpulsen der Schreibimpulsfolge;
Messen von Schreibimpulsbreiten von Schreibimpulsen der Schreibimpulsfolge;
respektives Multiplizieren der gemessenen Leistungswerte mit den gemessenen Schreibimpulsbreiten; und
Addieren aller der Multiplikationsergebnisse, um den Energiewert zu berechnen.

8. Verfahren nach einem der Ansprüche 6-7, wobei der Energiewert durch Integrieren der Schreibimpulsfolge berechnet wird und der integrierte Wert als der Energiewert ausgegeben wird.

9. Verfahren nach einem der Ansprüche 6-8, wobei die Schreibimpulsfolge mindestens ein Element von folgendem umfaßt: eine Mehrtyp-Schreibimpulsfolge, eine Nicht-Mehrtyp-Schreibimpulsfolge, eine Burgtyp-Schreibimpulsfolge oder eine Kombination davon.

10. Verfahren nach einem der Ansprüche 6-9, wobei der Energiewert durch Ändern eines Timings von Schreibimpulsen der Schreibimpulsfolge, einer Breite der Schreibimpulse, von Intervallen zwischen den Schreibimpulsen oder einer Kombination davon justiert wird.

11. Verfahren nach einem der Ansprüche 6-10, ferner mit einer Feinjustierung der Schreibimpulsfolge durch eine Fehlerratenmessung als Reaktion darauf, daß der Energiewert in dem vorbestimmten Bereich liegt.

## Revendications

1. Dispositif à disque optique comprenant :
une unité transducteur optique (120) devant être commandée par un train d'impulsions d'écriture pour enregistrer des données sur un disque optique (110) ;
une unité de commande de transducteur optique (130) pour générer et fournir le train d'impulsions d'écriture à l'unité transducteur optique ;
un calculateur de niveau d'énergie (140) pour calculer un niveau d'énergie du train d'impulsions d'écriture généré par l'unité de commande du transducteur optique ; et
un contrôleur (150) pour contrôler la génération du train d'impulsions d'écriture de l'unité de commande du transducteur optique de telle sorte que le niveau d'énergie calculé soit proche d'un niveau d'énergie de référence prédéterminé ; le dispositif étant **caractérisé en ce que** :
le contrôleur (150) contrôle l'unité de commande du transducteur optique (130) pour ajuster le train d'impulsions d'écriture en réponse à une valeur absolue d'une différence entre le niveau d'énergie calculé et le niveau d'énergie de référence dépassant un niveau de seuil prédéterminé.

2. Le dispositif selon la revendication 1, dans lequel le calculateur de niveau d'énergie comprend :
un élément de mesure de la puissance d'impulsion d'écriture (142) pour mesurer les niveaux de puissance des impulsions d'écriture constituant le train d'impulsions d'écriture ;
un élément de mesure de la largeur d'impulsion d'écriture (144) pour mesurer les largeurs d'impulsions des impulsions d'écriture constituant le train d'impulsions d'écriture ;
un multiplieur (146) pour multiplier respectivement les niveaux de puissance fournis à partir de l'élément de mesure de la puissance d'impulsion d'écriture par les largeurs d'impulsions d'écriture fournis à partir de l'élément de mesure de la largeur d'impulsion d'écriture ; et
un additionneur (148) pour additionner tous les résultats des multiplications pour calculer le niveau d'énergie.

3. Le dispositif selon une quelconque des revendications précédentes, dans lequel le calculateur de niveau d'énergie (140) intègre le train d'impulsions d'écriture, et fournit en sortie le résultat de l'intégration sous la forme du niveau d'énergie.

4. Le dispositif selon une quelconque des revendications précédentes, dans lequel le train d'impulsions d'écriture comprend au moins un des trains d'impulsions d'écriture suivants : train d'impulsions d'écriture multi-types, train d'impulsions d'écriture non multi-types, train d'impulsions d'écriture de type créneaux, ou une combinaison d'entre eux.

5. Le dispositif selon une quelconque des revendications précédentes, dans lequel le niveau d'énergie est ajusté en changeant un rythme d'impulsions d'écritures du train d'impulsions d'écriture, une largeur des impulsions d'écriture, des intervalles entre les impulsions d'écriture ou une combinaison d'entre eux.

6. Un procédé d'optimisation d'un train d'impulsions d'écriture, le procédé comprenant :
la génération d'un train d'impulsions d'écriture pour l'utilisation dans l'enregistrement de données sur un disque optique ;
le calcul d'un niveau d'énergie du train d'impulsions d'écriture généré ; et
le contrôle de la génération du train d'impulsions d'écriture pour rapprocher le niveau d'énergie calculé d'un niveau d'énergie de référence prédéterminé ; le procédé étant **caractérisé en ce que** :
le train d'impulsions d'écriture est ajusté en réponse à une valeur absolue d'une différence entre le niveau d'énergie calculé et le niveau d'énergie de référence dépassant un niveau de seuil prédéterminé.

7. Le procédé selon la revendication 6, dans lequel le calcul du niveau d'énergie du train d'impulsions d'écriture généré comprend :
la mesure des niveaux de puissance d'impulsions d'écriture du train d'impulsions d'écriture ;
la mesure des largeurs d'impulsions d'écriture d'impulsions d'écriture du train d'impulsions d'écriture ;
la multiplication respective des niveaux de puissance mesurés par les largeurs d'impulsions d'écriture mesurées ; et
l'addition de tous les résultats des multiplications pour calculer le niveau d'énergie.

8. Le procédé selon une quelconque des revendications 6-7, dans lequel le niveau d'énergie est calculé en intégrant le train d'impulsions d'écriture, et la valeur intégrée est fournie en sortie sous la forme du niveau d'énergie.

9. Le procédé selon une quelconque des revendications 6-8, dans lequel le train d'impulsions d'écriture comprend au moins un des trains d'impulsions d'écriture suivants : train d'impulsions d'écriture multi-types, train d'impulsions d'écriture non multi-types, train d'impulsions d'écriture de type créneaux, ou une combinaison d'entre eux.

10. Le procédé d'une quelconque des revendications 6-9, dans lequel le niveau d'énergie est ajusté en changeant un rythme d'impulsions d'écritures du train d'impulsions d'écriture, une largeur des impulsions d'écriture, les intervalles entre les impulsions d'écriture ou une combinaison d'entre eux.

11. Le procédé d'une quelconque des revendications 6-10, comprenant de plus l'ajustage fin du train d'impulsions d'écriture au moyen de la mesure du taux d'erreurs en réponse au niveau d'énergie situé à l'intérieur de la plage prédéterminée.
